**Europäisches Patentamt**

**European Patent Office**

**Office européen des brevets**

(19)

(11) Numéro de publication : **0 300 852 B1**

(12)

# FASCICULE DE BREVET EUROPEEN

(45) Date de publication du fascicule du brevet :
18.09.91 Bulletin 91/38

(51) Int. Cl.$^5$ : **C01F 17/00**

(21) Numéro de dépôt : **88401594.2**

(22) Date de dépôt : **24.06.88**

(54) **Oxyde cérique à nouvelles caractéristiques morphologiques et son procédé d'obtention.**

(30) Priorité : **29.06.87 FR 8709122**

(43) Date de publication de la demande :
**25.01.89 Bulletin 89/04**

(45) Mention de la délivrance du brevet :
**18.09.91 Bulletin 91/38**

(84) Etats contractants désignés :
**AT BE CH DE ES FR GB GR IT LI LU NL SE**

(56) Documents cités :
**EP-A- 0 153 227
EP-A- 0 207 857
EP-A- 0 208 580
EP-A- 0 239 478
EP-A- 0 239 479
FR-A- 2 593 195**

(73) Titulaire : **RHONE-POULENC CHIMIE
25, quai Paul Doumer
F-92408 Courbevoie Cédex (FR)**

(72) Inventeur : **Le Loarer, Jean-Luc
24, rue du Général Guillaumat
F-17000 La Rochelle (FR)**

(74) Mandataire : **Dutruc-Rosset, Marie-Claude et al
RHONE-POULENC INTERSERVICES Service
Brevets Chimie 25, Quai Paul Doumer
F-92408 Courbevoie Cédex (FR)**

EP 0 300 852 B1

Jouve, 18, rue Saint-Denis, 75001 PARIS

## Description

La présente invention a pour objet un oxyde cérique à nouvelles caractéristiques morphologiques. L'invention vis également un des procédés d'obtention dudit oxyde.

Dans l'exposé que suit de l'invention, on entend par surface spécifique, la surface spécifique B.E.T. déterminée par adsorption d'azote conformément à la norme ASTM D 3663-78 établie à partir de la méthode BRUNAUER—EMMETT—TELLER décrite dans le périodique "The Journal of American Society, 60, 309 (1938)".

Il est connu que l'oxyde cérique peut être utilisé en tant que catalyseur ou support de catalyseur. On peut citer par exemple, les travaux de Paul MERIAUDEAU et Coll. relatifs à la synthèse du méthanol à partir de CO + H$_2$ sur des catalyseurs au platine déposé sur de l'oxyde cérique. (C.R. Acad. Sc. Paris t. 297 — Série II-471-1983).

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Lors de l'emploi prolongé d'un support de catalyseur, il se produit une diminution de la surface spécifique due à la coalescence des micropores très fins. Au cours de cette coalescence, une partie du catalyseur est englobée dans la masse du support et ne peut plus être en contact avec les réactifs.

Jusqu'à présent, la plupart des oxydes cériques préparés présentent une surface spécifique qui décroit rapidement pour des températures de fonctionnement supérieures à 500°C. Ainsi, R. ALVERO et coll. (J. Chem. Soc. Dalton Trans 1984, 87) ont obtenu à partir de cérinitrate d'ammonium, un oxyde cérique présentant après calcination à une température de 600°C, une surface spécifique de 29 m$^2$/g.

Par ailleurs, on a décrit dans FR-A 2559754 un oxyde cérique présentant une surface spécifique d'au moins 85 ± 5 m$^2$/g obtenue après calcination entre 350 et 450°C et, de préférence, située entre 100 et 130 m$^2$/g après calcination entre 400 et 450°C. Ledit oxyde est préparé par hydrolyse d'une solution aqueuse de nitrate cérique en milieu acide nitrique, puis séparation du précipité obtenu, lavage à l'aide d'un solvant organique, éventuellement séchage, puis calcination. L'oxyde cérique obtenu présente une surface spécifique intéressante lorsqu'il est préparé dans une gamme de température de calcination allant de 300 à 600°C. Toutefois, on note une chute de la surface spécifique après calcination à une température plus haute, la surface spécifique étant de 10 m$^2$/g, après calcination à 800°C.

On peut également citer FR-A 2559755 qui concerne un oxyde cérique présentant une surface spécifique d'au moins 85 ± 5 m$^2$/g après calcination entre 350 et 500°C et, de préférence, située entre 150 et 180 m$^2$/g après calcination entre 400 et 450°C. Cet oxyde est obtenu selon un procédé qui consiste à précipiter un sulfate basique cérique en faisant réagir une solution aqueuse de nitrate cérique et une solution aqueuse contenant des ions sulfate, à séparer le précipité obtenu, à le laver à l'aide d'une solution d'ammoniaque, éventuellement à le sécher puis à le calciner à une température variant entre 300 et 500°C. L'oxyde cérique ainsi préparé une grande surface spécifique, mais lorsqu'il est soumis à une opération de calcination à 800°C, sa surface spécifique décroit considérablement et se situe vers 10 m$^2$/g.

Un des objectifs de la présente invention est de fournir un oxyde cérique qui présente une grande surface spécifique à haute température.

Un autre objectif de l'invention est de disposer d'un procédé permettant d'obtenir un tel oxyde.

La caractéristique de l'oxyde cérique de l'invention est qu'il présente une surface spécifique d'au moins 15 m$^2$/g mesurée après calcination à une température comprise entre 800 et 900°C.

L'oxyde cérique préféré de l'invention présente une surface spécifique comprise entre 20 et 60 m$^2$/g mesurée après calcination à une température de 800°C.

Selon les conditions de calcination de l'hydroxyde cérique, l'oxyde cérique présente une surface spécifique comprise entre 15 et 160 m$^2$/g mesurée après calcination à une température variant entre 350 et 900°C.

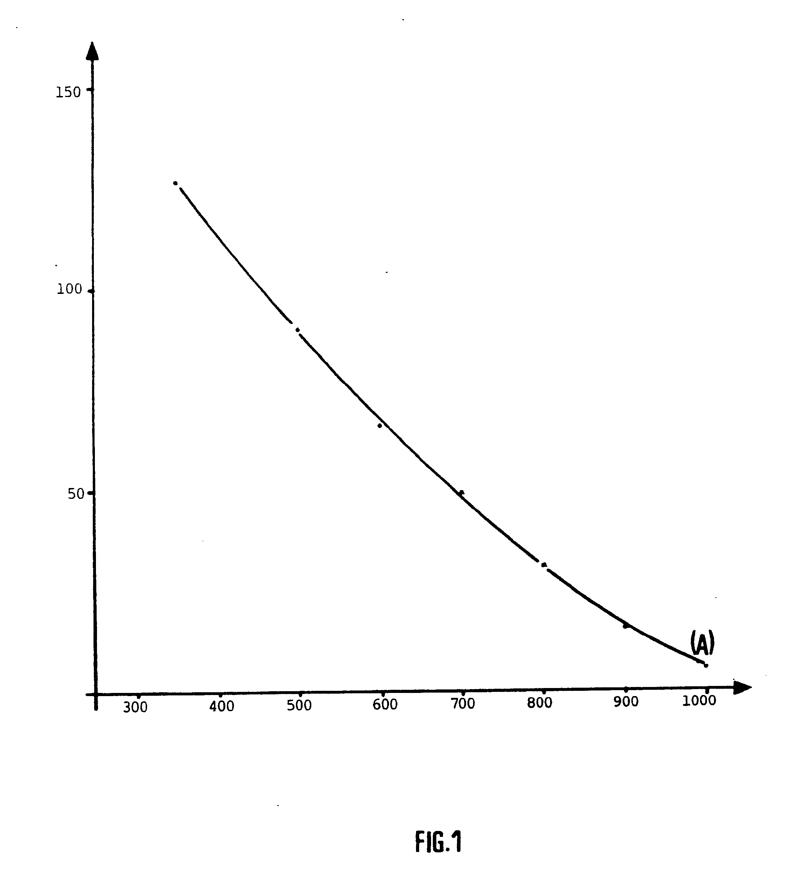

La figure 1 représente un graphe sur lequel est portée la courbe (A) de variation de la surface spécifique (exprimée en m$^2$/g) d'un oxyde cérique de l'invention, en fonction de la température de calcination donnée en °C.

L'oxyde cérique de l'invention présente une surface spécifique d'au moins 15 m$^2$/g, mesurée après calcination à une température comprise entre 800°C et 900°C et une surface spécifique supérieure à ladite surface, après calcination à une température inférieure à l'intervalle précité.

C'est ainsi qu'il peut présenter une surface spécifique variant entre 70 et 160 m$^2$/g et, de préférence, entre 100 et 160 m$^2$/g, mesurée après calcination entre 350 et 450°C. Toutefois, lorsqu'il sera soumis à une température plus élevée pouvant atteindre 900°C, au moment de son utilisation, notamment dans le domaine de la catalyse, il présente la caractéristique de conserver une surface spécifique d'au moins 15 m$^2$/g et, de préfé-

rence, comprise entre 20 et 60 m²/g lorsqu'il est soumis à une température de 800°C.

Dans la présente demande, les surfaces spécifiques exprimées sont mesurées sur un produit ayant subi une calcination d'au moins 2 heures.

Une autre caractéristique de l'oxyde cérique de l'invention est qu'il présente un volume poreux supérieur à 0,1 cm³/g à une température de mesure comprise entre 800 et 900°C et, de préférence, supérieur à 0,15 cm³/g.

Le volume poreux correspondant aux pores de diamètre inférieur à 60 nm (600 Å) est mesuré au porosimètre à mercure selon la norme ASTM D4284-83 ou suivant la méthode des isothermes d'adsorption d'azote, méthode B.E.T. précitée.

Comme la surface spécifique, le volume poreux dépend de la température de calcination : il peut varier entre 0,35 et 0,15 cm³/g pour une température de calcination allant de 350 à 900°C.

L'oxyde cérique préféré de l'invention présente un volume poreux compris entre 0,15 et 0,25 cm³/g après calcination à une température de 800°C.

La taille des pores d'un oxyde cérique calciné à 800°C s'échelonne entre 3 nm (30 Å) et 60 nm (600 Å) : le diamètre moyen ($d_{50}$) des pores varie entre 20 nm (200 Å) et 30 nm (300 Å), de préférence, aux environs de 25 nm (250 Å).

On définit le diamètre moyen comme étant un diamètre tel que tous les pores inférieurs à ce diamètre constituent 50% du volume poreux (Vp) total des pores de diamètre inférieur à 60 nm (600 Å).

Un oxyde cérique calciné à 350°C présente des pores de 2 nm (20 Å) à 100 nm (1000 Å) : le diamètre moyen variant de 10 nm (100 Å) à 20 nm (200 Å) et, de préférence, voisin de 15 nm (150 Å).

L'analyse par diffraction X montre que l'oxyde cérique de l'invention présente une phase cristalline de type $CeO_2$ ayant un paramètre de maille variant de 0,542 nm (5,42 Å) à 0,544 nm (5,44 Å). A titre indicatif, on précisera que la taille des cristallites d'un oxyde cérique obtenu après calcination à 350°C se situe entre 4 nm (40 Å) et 6 nm (60Å) et après calcination à 800°C, entre 10 nm (100 Å) et 20 nm (200 Å).

Le procédé d'obtention de l'oxyde cérique présentant une surface spécifique d'au moins 15 m²/g pour une température de mesure comprise entre 800°C et 900°C est caractérisé par le fait qu'il consiste :

— à préparer un hydroxyde cérique en faisant réagir une solution de sel de cérium, et une base, éventuellement en présence d'un agent oxydant, la proportion de base étant telle que le pH du milieu réactionnel est supérieur à 7 ; à séparer le précipité obtenu, éventuellement à le laver ;

— à mettre l'hydroxyde cérique en suspension dans l'eau ou dans une solution aqueuse d'une base décomposable ;

— à le chauffer dans une enceinte close jusqu'à une température et une pression inférieures respectivement à la température critique et à la pression critique dudit milieu ;

— à refroidir le mélange réactionnel et à le ramener à la pression atmosphérique ;

— à séparer l'hydroxyde cérique ainsi traité ;

— puis à le calciner.

La demanderesse a trouvé qu'un oxyde cérique à grande surface spécifique à température élevée, pouvait être obtenu en soumettant un hydroxyde cérique ou hydrate d'oxyde cérique obtenu par précipitation basique à partir d'une solution d'un sel de cérium dans des conditions bien définies, à un traitement d'autoclavage effectué dans l'eau ou dans une solution aqueuse d'une base décomposable, avant l'opération de calcination.

Intervient dans le procédé de l'invention, un hydroxyde cérique préparé selon le procédé décrit ci-après qui consiste à faire réagir une solution de sel de cérium et une base, éventuellement en présence d'un agent oxydant, à séparer le précipité obtenu, éventuellement à le laver, et/ou le sécher.

La solution de sel de cérium mise en oeuvre peut être toute solution aqueuse de sel de cérium à l'état céreux et/ou cérique soluble dans les conditions de préparation, notamment une solution de chlorure céreux ou de nitrate de cérium à l'état céreux ou cérique ou un mélange d'entre eux.

La solution de sel de cérium est choisie de telle sorte qu'elle ne contienne pas d'impuretés qui puissent se retrouver dans le produit calciné. Il peut être avantageux de mettre en jeu un sel de cérium présentant un degré de pureté supérieur à 99%.

La concentration de la solution de sel de cérium n'est pas un facteur critique, selon l'invention, et elle peut varier dans de larges limites ; une concentration comprise entre 0,2 et 4 moles par litre est préférée.

Selon une variante préférée, on introduit le cérium dans le milieu réactionnel à l'état céreux et on l'oxyde à l'état cérique avec un agent oxydant.

Parmi les agents oxydants pouvant convenir, on peut citer notamment des solutions de perchlorate, de chlorate, d'hypochlorite, de persulfate de sodium, de potassium ou d'ammonium, d'eau oxygénée ou l'air, l'oxygène, l'ozone. On utilise de préférence l'eau oxygénée.

La proportion d'agent oxydant par rapport au sel céreux à oxyder peut varier dans de larges limites. Elle est, en général, supérieure à la stoechiométrie et correspond, de préférence, à un excès compris entre 10 et 40%.

Une autre variante préférée de l'invention consiste à faire appel à une solution aqueuse de nitrate cérique. Cette dernière présente généralement une certaine acidité initiale et peut avoir une normalité variant entre 0,01 N et 5 N. La concentration en ions H$^+$ n'est pas critique. Il est souhaitable qu'elle se situe entre 0,1 N et 1 N.

A titre de matières premières, on peut faire appel à une solution de nitrate cérique obtenue par action de l'acide nitrique sur un oxyde cérique hydraté préparé d'une manière classique, par exemple, par action de l'acide nitrique sur le carbonate céreux et addition d'une solution d'ammoniaque en présence d'un agent oxydant, de préférence, l'eau oxygénée.

La solution de nitrate cérique obtenue selon le procédé d'oxydation électrolytique d'une solution de nitrate céreux et qui est décrite dans la demande de brevet français FR-A 2570087 (n° 8413641) constitue une matière première de choix.

La précipitation de l'hydroxyde cérique peut être effectuée par réaction de la solution de sel de cérium et d'une solution basique.

La solution basique mise en oeuvre peut être notamment une solution aqueuse d'ammoniaque ou d'hydroxyde de sodium, de potassium. On met en oeuvre de préférence une solution d'ammoniaque. La normalité de la solution basique mise en oeuvre n'est pas un facteur critique selon l'invention : elle peut varier dans de larges limites, et elle sera toutefois avantageusement comprise entre 1 et 5 N, de préférence 2 à 3 N.

La quantité de base additionnée est déterminée de telle sorte que le pH du milieu réactionnel soit supérieur à 7. Il est choisi, de préférence, supérieur à 7,0 et inférieur à environ 10 et encore plus préférentiellement entre 7,5 et 9,0.

Il peut être particulièrement avantageux de régler le pH dans ces limites à une valeur constante à ± 0,1 unité de pH.

La température du milieu réactionnel doit être comprise, de préférence, entre 5 et 70°C, et, plus particulièrement, entre 40 et 70°C. La durée de mélange dans le milieu réactionnel n'est pas un facteur critique selon l'invention et peut varier dans de larges limites ; généralement, on choisira des durées comprises entre 15 minutes et 2 heures.

On obtient un précipité que peut être séparé selon les techniques classiques de séparation solide/liquide, telles que décantation, essorage, filtration et/ou centrifugation.

Il est souhaitable de soumettre le précipité séparé à un lavage afin d'éliminer les anions restants adsorbés sur le précipité.

Le lavage est opéré, de préférence, à l'eau ou à l'aide d'une solution basique ayant, de préférence, une concentration comprise entre 1 et 5 N. On utilise, de préférence, une solution d'ammoniaque. On peut effectuer de un à plusieurs lavages et, le plus souvent, de un à trois lavages.

L'hydroxyde cérique séparé et de préférence lavé peut être mis en oeuvre directement dans le procédé de l'invention. Il est également possible de faire appel à un hydroxyde cérique ayant subi une opération de séchage. Le séchage peut être effectué à l'air ou sous pression réduite, par exemple, de l'ordre de 1 à 100 mm de mercure (133,322 Pa à 13332,2 Pa). La température de séchage peut varier entre la température ambiante et 100°C et la durée de séchage n'est pas critique et peut être comprise entre 2 et 48 heures. L'opération de séchage est facultative et un séchage trop poussé n'est pas souhaité.

L'hydroxyde cérique préparé selon le mode de précipitation tel que précédemment décrit et mis en oeuvre préférentiellement répond à la formule (I) suivante :

$$Ce(OH)_x(X)_y, n\, H_2O \quad (I)$$

dans laquelle :
— X représente un anion chlorure ou nitrate,
— y est inférieur à 0,5,
— x = 4 − y,
— n varie entre 0 et environ 20

Le composé préféré répond à la formule (I) dans laquelle y est compris entre 0 et 0,1. Encore plus préférentiellement, X représente un anion nitrate.

Le composé préféré répondant à la formule (I) est préparé en faisant réagir une solution de chlorure ou nitrate céreux et une solution d'ammoniaque, en présence d'eau oxygénée, à séparer le précipité obtenu et à le soumettre à au moins un lavage, de préférence, à l'eau.

La proportion de base ajoutée est telle que le pH réactionnel soit supérieur à 7 et, de préférence, compris en 7,5 et 9.

La température du milieu réactionnel est choisie entre 5 et 70°C, de préférence, entre 40 et 70°C.

L'hydroxyde cérique obtenu selon le procédé décrit ci-dessus est mis en oeuvre préférentiellement dans le procédé, objet de la présente invention.

Conformément au procédé de l'invention, on met en oeuvre l'hydroxyde cérique sous forme de suspension dans l'eau ou dans une solution aqueuse d'une base décomposable dans les conditions de calcination de l'invention.

On entend par base décomposable, un composé présentant un $pk_b$ inférieur à 7 et susceptible de se décomposer dans les conditions de calcination de l'invention.

A titre illustratif de ces dernières, on peut citer l'ammoniaque, l'urée, l'acétate d'ammonium, l'hydrogénocarbonate d'ammonium, le carbonate d'ammonium, ou une amine primaire, secondaire, tertiaire, comme, par exemple, la méthylamine, l'éthylamine, la propylamine, la n-butylamine, la sec-butylamine, la n-pentylamine, l'amino-2 pentane, l'amino-2 méthyl-2 butane, l'amino-1 méthyl-3 butane, le diamino-1,2 éthane, le diamino-1,2 propane, le diamino-1,3 propane, le diamino-1,4 butane, le diamino-1,5 pentane, le diamino-1,6 hexane, la diméthylamine, la diéthylamine, la triméthylamine, la triéthylamine ou une amine quaternaire comme, par exemple, un hydroxyde de tétraalkylammonium ayant de préférence des radicaux alkyle contenant de 1 à 4 atomes de carbone et l'on fait appel plus particulièrement à l'hydroxyde de tétraméthylammonium ou l'hydroxyde de tétraéthylammonium.

On peut également mettre en oeuvre un mélange de bases.

Une variante préférée du procédé de l'invention consiste à faire appel à une solution d'une base décomposable car l'on a trouvé, de manière inattendue, que le fait de conduire l'opération d'autoclavage dans un tel milieu permet non seulement d'accroître la surface spécifique de l'oxyde cérique obtenu, mais également de conserver une surface spécifique et un volume poreux plus élevés jusqu'à des températures de 900°C.

On fait appel, de préférence, à une solution d'ammoniaque, d'hydroxyde de tétraalkylammonium ou leurs mélanges.

Lorsque le milieu liquide est une solution basique, la concentration de celle-ci n'est pas un facteur critique selon l'invention. Elle peut varier dans de larges limites, par exemple, entre 0,1 et 11 N, mais il est préférable de faire appel à des solutions dont la concentration varie entre 1 et 10 N.

Dans le milieu liquide, la concentration de l'hydroxyde cérique exprimée en $CeO_2$ peut varier entre 0,3 et 6 moles/litre, de préférence, entre 2 et 3 moles/litre.

L'opération d'autoclavage est effectuée à une température située entre la température de reflux et la température critique du mélange réactionnel. On choisit de préférence une température comprise entre 100°C et 350°C, et encore plus préférentiellement, entre 150°C et 350°C.

La montée en température s'effectue à une vitesse qui n'est pas critique. On atteint la température réactionnelle en chauffant par exemple entre 30 minutes et 4 heures.

On peut conduire le procédé de l'invention, en introduisant l'hydroxyde cérique en suspension dans le milieu liquide dans une enceinte close, la pression ne résulte donc que du chauffage du mélange réactionnel.

Dans les conditions de températures données ci-dessus, et en milieu aqueux, on peut préciser, à titre illustratif que la pression varie entre 1($10^5$ Pa) et 165 Bars (165.$10^5$ Pa) de préférence entre 5(5. $10^5$ Pa) et 165 Bars (165.$10^5$ Pa).

Il est également possible d'exercer une pression extérieure qui s'ajoute alors à celle consécutive au chauffage.

La durée de l'opération d'autoclavage n'est pas critique. Elle peut varier entre 30 minutes et 6 heures.

A la fin de celle-ci, on laisse refroidir à l'inertie du système et l'on ramène le système à la pression atmosphèrique.

On sépare le produit en suspension dans le milieu liquide selon les techniques classiques de séparation solide-liquide telles que décantation, essorage, filtration et/ou centrifugation.

Le produit recueilli peut être éventuellement soumis à un lavage et/ou un séchage dans les conditions telles que précédemment décrites.

Selon une dernière étape du procédé de l'invention, on calcine le produit obtenu à une température comprise entre 300°C et 1000°C et, de préférence, choisie entre 350°C et 800°C.

La durée de la calcination peut varier dans de larges limites entre 30 minutes et 10 heures et, de préférence, entre 2 et 6 heures.

L'oxyde cérique selon l'invention présente une grande surface spécifique à haute température si bien qu'il convient tout-à-fait bien pour le domaine de la catalyse, comme catalyseur ou comme support catalytique.

Il est particulièrement bien adapté pour être employé comme support catalytique dans les réactions de traitement des gaz d'échappement des moteurs à combustion interne.

Les exemples qui suivent, illustrent l'invention sans toutefois la limiter.

Les exemples 1 à 9 concernent le nouvel oxyde cérique de l'invention et son procédé d'obtention.

Les essais A et B sont donnés à titre comparatif : ils ne font pas intervenir un traitement d'autoclavage.

5

## Exemple 1

### 1. Essai A      Synthèse de l'hydroxyde cérique :

Dans un réacteur à double enveloppe ayant un volume utile de 2 litres, équipé d'un dispositif d'agitation, d'un système d'introduction de réactif (pompe doseuse), on introduit à 50°C, 922 cm³ d'une solution de nitrate céreux contenant 179 g/l de $CeO_2$ et 38 cm³ d'une solution d'eau oxygénée à 200 volumes.

On ajoute jusqu'à obtention d'un pH égal à 8,4, 825 cm³ d'une solution aqueuse d'ammoniaque 4 N.

Les réactifs additionnés, on maintient le milieu réactionnel à 70°C pendant 1 heure.

On effectue ensuite, la séparation du précipité, sur Büchner.

On obtient 569 g d'un hydroxyde cérique présentant un rapport molaire $NO_3^-/Ce$ de 0,1.

L'analyse par diffraction RX révèle que l'hydroxyde cérique présente des cristallites ayant un diamètre de 3 nm (30 Å).

### 2. Autoclavage de l'hydroxyde cérique :

Dans un bécher de 100 cm³ de forme haute, on introduit successivement 30 cm³ d'eau désionisée et 30 g de l'hydroxyde cérique préparé précédemment.

Après homogénéisation de ce dernier dans son milieu, le bécher est placé dans un autoclave de volume utile de 0,5 l environ.

L'ensemble est porté à 200°C, soit environ 16 bars, ($16.10^5$ Pa) pendant 4 heures au moyen de chauffage approprié.

A la fin de ce traitement hydrothermal, on filtre le précipité sur Büchner.

On détermine sur le produit humide, par diffraction RX, un diamètre moyen de cristallites de 4,5 nm (45 Å).

On le soumet ensuite à une opération de calcination pendant 2 heures, une fraction étant calcinée à 350°C et l'autre à 800°C.

On détermine ensuite selon les méthodes définies dans la description, la surface spécifique de l'oxyde cérique obtenu et son volume poreux < 60 nm (< 600 Å).

On effectue également une diffraction des rayons X pour la détermination de la taille des cristallites perpendiculaires aux directions 110 et 220.

Les résultats obtenus sont données dans le tableau I. A titre de comparaison, on indique ceux d'un oxyde cérique préparé, par calcination directe à 350°C et à 800°C, pendant 2 heures de l'hydroxyde cérique synthétisé sous 1 (essai A).

### Tableau I

| | Température de calcination °C | surface spécifique m²/g | volume poreux cm³/g | diamètre des cristallites nm (Å) |
|---|---|---|---|---|
| Exemple 1 | 350<br>800 | 110<br>21 | 0,20<br>0,08 | 5,0 (50)<br>– |
| Essai A (sans autoclavage) | 350<br>800 | 46<br>11 | 0,16<br>0,06 | 6,5 (65)<br>30 (300) |

Lorsque l'oxyde cérique est calciné à plus haute température, on note une diminution de surface et de volume poreux due au frittage important qui se traduit par la forte augmentation des cristallites entre 350°C et 800°C.

Toutefois, on observe l'effet favorable du traitement d'autoclavage sur la surface spécifique et le volume poreux.

## Exemple 2

1. Essai A     Synthèse de l'hydroxyde cérique :

Elle est effectuée conformément au mode opératoire de l'exemple 1-1.

2. Autoclavage de l'hydroxyde cérique :

Selon le protocole opératoire décrit dans l'exemple 1, on soumet 30 g de l'hydroxyde cérique préparé ci-dessus, mis en suspension dans 30 cm³ d'une solution aqueuse d'ammoniaque 1 N, à un traitement en autoclave, à 200°C pendant 4 heures.

On détermine sur le produit humide, par diffraction RX, un diamètre moyen de cristallites de 4 nm (40 Å).

A la fin de ce traitement hydrothermal, on filtre le précipité sur Büchner.

On le soumet ensuite à une opération de calcination, pendant 2 heures : une fraction étant calcinée à 350°C et l'autre à 800°C.

On détermine ensuite la surface spécifique, le volume poreux et la taille des cristallites de l'oxyde cérique ayant subi le traitement d'autoclavage (exemple 2) et, à titre comparatif, de l'oxyde cérique préparé par calcination directe à 350°C et à 800°C pendant 2 heures, de l'hydroxyde cérique synthétisé sous 1 (essai A).

Les résultats obtenus sont consignés dans le tableau II.

### Tableau II

|  | Température de calcination °C | Surface spécifique m²/g | Volume poreux cm³/g | diamètre des cristallites nm (Å) |
|---|---|---|---|---|
| Exemple 2 | 350 800 | 127 30 | 0,35 0,19 | 4,5 (45) 19  (190) |
| Essai A (sans au-toclavage) | 350 800 | 46 11 | 0,16 0,06 | 6,5 (65) 30  (300) |

On observe comme dans l'exemple précédent, l'effet favorable de l'autoclavage sur la surface spécifique et le volume poreux de l'oxyde cérique obtenu après calcination à 800°C.

## Exemple 3

1. Synthèse de l'hydroxyde cérique :

Elle est effectuée conformément au mode opératoire de l'exemple 1-1.

2. Autoclavage de l'hydroxyde cérique :

Dans un bécher de 100 cm³ de forme haute, on introduit successivement 25 cm³ d'une solution aqueuse d'hydroxyde de tétraéthylammonium à 20% et 15 g d'hydroxyde cérique préparé précédemment.

Après homogénéisation du milieu, le bécher est placé dans l'autoclave.

L'ensemble est porté à 200°C, soit environ 16 bars (16.10⁵ Pa) pendant 3 heures au moyen de chauffage approprié.

A la fin de traitement thermique, on filtre le précipité sur Büchner.

7

On le soumet ensuite à une opération de calcination dans les conditions suivantes : une fraction est calcinée 2 heures à 350°C et l'autre est calcinée 1 heure à 800°C.

On détermine ensuite la surface spécifique et le volume poreux des oxydes cériques obtenus.

On rassemble les résultats dans le tableau III.

Tableau III

|  | Température de calcination °C | surface spécifique m²/g | volume poreux cm³/g |
|---|---|---|---|
| Exemple 3 | 350 800 | 115 29 | 0,53 0,23 |

Exemples 4 à 9 :

1. Essai B    Synthèse de l'hydroxyde cérique :

Dans un appareillage tel que décrit à l'exemple 1, on introduit à température ambiante, 922 cm³ d'une solution de nitrate céreux contenant 150 g/l de $CeO_2$ et 38 cm³ d'une solution d'eau oxygénée à 200 volumes.

On ajoute jusqu'à obtention d'un pH égal à 9,5, 150 cm³ d'une solution aqueuse d'ammoniaque 3 N, en maintenant la température à 8°C.

Les réactifs additionnés, on maintient le milieu réactionnel à 8°C pendant 1 heure.

On effectue ensuite, la séparation du précipité, sur Büchner et l'on effectue un lavage à l'eau.

L'analyse par diffraction RX révèle que l'hydroxyde cérique présente des cristallites ayant un diamètre moyen de 3,5 nm (35 Å).

2. Autoclavage de l'hydroxyde cérique :

On effectue une série d'essais dans lesquels on fait varier la température d'autoclavage entre 160 et 330°C.

Selon le même protocole opératoire décrit dans les exemples précédents, on met 150 g d'hydroxyde cérique préparé ci-dessus en suspension dans 150 cm³ d'une solution aqueuse d'ammoniaque 1 N et on le soumet à un traitement en autoclave pendant 4 heures.

A la fin de ce traitement thermique, on filtre le précipité sur Büchner.

On le soumet ensuite à une opération de calcination dans les conditions suivantes : une fraction est calcinée 2 heures à 350°C et l'autre calcinée 2 heures à 800°C.

On détermine ensuite sur la surface spécifique et le volume poreux des oxydes cériques obtenus.

A titre comparatif, on donne les résultats obtenus avec un oxyde cérique préparé par calcination directe à 350°C et à 800°C pendant 2 heures, de l'hydroxyde cérique synthétisé sous 1 (essai B).

On consigne tous les résultats obtenus dans le tableau IV.

8

Tableau IV

| | Température d'autoclavage °C | Température de calcination °C | Surface spécifique m²/g | Volume poreux cm³/g |
|---|---|---|---|---|
| Exemple 4 | 160 160 | 350 800 | 69 20 | |
| Exemple 5 | 180 180 | 350 800 | 85 20 | |
| Exemple 6 | 200 200 | 350 800 | 131 26 | 0,24 0,15 |
| Exemple 7 | 250 250 | 350 800 | 126 27 | 0,27 0,14 |
| Exemple 8 | 300 300 | 350 800 | 81 31 | 0,20 0,12 |
| Exemple 9 | 330 330 | 350 800 | 73 45 | 0,25 0,17 |
| Essai B | - | 350 800 | 65 9,7 | 0,12 0,07 |

On remarque que les oxydes cériques de l'invention présentent des surfaces spécifiques élevées mesurées après calcination à 800°C.

Exemple 10

1. Essai C    Synthèse de l'hydroxyde cérique :

Dans un réacteur à double-enveloppe dans laquelle circule de l'eau thermorégulée à 20°C et ayant une capacité utile de 2000 cm³, équipé d'un dispositif d'agitation, d'un système d'introduction de réactifs, on introduit simultanément et en continu :

— un solution aqueuse de nitrate cérique contenant 1 mole/litre de cérium IV, 0,06 mole/litre de cérium III et ayant une acidité libre de 0,5 N, préparée par électrolyse conformément à FR-A 2570087 (n° 8413641), à raison de 0,78 litre/heure

— une solution aqueuse d'ammoniaque 3 N, à raison de 1,22 litres/heure.

Le mélange est effectué sous agitation de 300 tours/minute et le temps de séjour est de 60 minutes.

Les débits d'addition des solutions de départ sont régulés de telle sorte que le pH soit maintenu à 9,0.

On sépare le précipité formé par filtration Büchner.

On obtient un produit contenant 20% en poids d'oxyde cérique et ayant une taille de cristallites inférieure à 3 nm (30 Å).

2. Autoclavage de l'hydroxyde cérique :

Dans un autoclave de 0,5 l de volume utile, on introduit successivement 300 cm³ de $NH_4OH$ 1 N et 100 g de l'hydroxyde cérique préparé précédemment.

Après homogénéisation de ce dernier dans son milieu, l'ensemble est porté à 200°C, soit environ 16 bars (16.10⁵ Pa), pendant 3 heures au moyen de chauffage approprié.

A la fin de ce traitement hydrothermal, on filtre le précipité sur Büchner.

On soumet ensuite deux fractions de ce produit humide à une opération de calcination dans les conditions suivantes : 2 heures à 350°C et 1 heure à 800°C.

9

On détermine ensuite selon les méthodes définies dans la description la surface spécifique de l'oxyde cérique obtenu et son volume poreux.

Les résultats obtenus sont donnés dans le tableau V.

A titre comparatif, on indique ceux d'un oxyde cérique préparé par calcination directe à 350°C pendant 2 heures et à 800°C pendant 1 heure de l'hydroxyde cérique synthétisé sous 1.

Tableau V

|  | Température de calcination °C | surface spécifique m²/g | volume poreux cm³/g |
|---|---|---|---|
| Exemple 10 | 350 800 | 155 17 | 0,24 0,06 |
| Essai C (sans auto- clavage) | 350 800 | 53 4,9 | 0,05 0,03 |

On note l'effet favorable de l'autoclavage sur la surface spécifique et le volume poreux de l'oxyde cérique obtenu après calcination à 800°C.

## Revendications

1. Oxyde cérique caractérisé par le fait qu'il présente une surface spécifique d'au moins 15 m²/g, mesurée après calcination à une température comprise entre 800 et 900°C.

2. Oxyde cérique selon la revendication 1 caractérisé par le fait qu'il présente une surface spécifique comprise entre 20 et 60 m²/g, mesurée après calcination à une température de 800°C.

3. Oxyde cérique selon l'une des revendications 1 et 2 caractérisé par le fait qu'il présente un volume poreux d'au moins 0,1 cm³/g mesurée après calcination à une température comprise entre 800°C et 900°C.

4. Oxyde cérique selon la revendication 3 caractérisé par le fait qu'il présente un volume poreux compris entre 0,15 et 0,25 cm³/g, après calcination à une température de 800°C.

5. Oxyde cérique selon l'une des revendications 1 à 4 caractérisé par le fait qu'il présente un diamètre moyen des pores variant entre 20 nm (200 Å) et 30 nm (300 Å), après calcination à une température de 800°C.

6. Oxyde cérique selon l'une des revendications 1 et 2 caractérisé par le fait qu'il présente une surface spécifique comprise entre 15 et 160 m²/g, mesurée après calcination à une température comprise entre 350°C et 900°C.

7. Oxyde cérique selon la revendication 6 caractérisé par le fait qu'il présente un volume poreux variant de 0,35 à 0,15 cm³/g, après calcination à une température variant de 350°C à 900°C.

8. Oxyde cérique caractérisé par le fait qu'il présente une surface spécifique comprise entre 70 et 160 m²/g, mesurée après calcination à une température comprise entre 350°C et 450°C et qu'il conserve une surface spécifique d'au moins 15 m²/g lorsqu'il est soumis à une température comprise entre 800°C et 900°C.

9. Oxyde cérique selon la revendication 8 caractérisé par le fait qu'il conserve une surface spécifique comprise entre 20 et 60 m²/g, lorsqu'il est soumis à une température de 800°C.

10. Oxyde cérique selon l'une des revendications 8 et 9 caractérisé par le fait qu'il présente une surface spécifique comprise entre 100 et 160 m²/g, mesurée après calcination à une température comprise entre 350°C et 450°C.

11. Oxyde cérique selon l'une des revendications 8 à 10 caractérisé par le fait qu'il présente un diamètre moyen des pores variant entre 10 nm (100 Å) et 20 nm (200 Å), après calcination à une température de 350°C.

12. Procédé d'obtention de l'oxyde cérique décrit dans l'une des revendications 1 à 11 caractérisé par le fait qu'il consiste :

— à préparer un hydroxyde cérique en faisant réagir une solution de sel de cérium, et une base, éventuellement en présence d'un agent oxydant, la proportion de base étant telle que le pH du milieu réactionnel est supérieur à 7 ; à séparer le précipité obtenu, éventuellement à le laver ;

— à mettre l'hydroxyde cérique en suspension dans l'eau ou dans une solution aqueuse d'une base décomposable ;

— à le chauffer dans une enceinte close jusqu'à une température et une pression inférieures respectivement à la température critique et à la pression critique dudit milieu (autoclavage) ;

— à refroidir le mélange réactionnel et à le ramener à la pression atmosphérique ;

— à séparer l'hydroxyde cérique ainsi traité ;

— puis à le calciner ;

13. Procédé selon la revendication 12 caractérisé par le fait que la solution de sel de cérium est une solution de chlorure céreux ou de nitrate de cérium à l'état céreux ou cérique ou un mélange d'entre eux.

14. Procédé selon la revendication 12 caractérisé par le fait que la solution de sel de cérium est une solution aqueuse de nitrate cérique ou une solution aqueuse de nitrate céreux mis en oeuvre en présence d'un agent oxydant.

15. Procédé selon la revendication 14 caractérisé par le fait que la solution de sel de cérium est une solution aqueuse de nitrate cérique provenant de l'oxydation électrochimique d'une solution de nitrate céreux ou de l'action de l'acide nitrique sur un oxyde cérique hydraté.

16. Procédé selon l'une des revendications 12 à 15 caractérisé par le fait que la base est une solution d'ammoniaque.

17. Procédé selon la revendication 14 caractérisé par le fait que l'agent oxydant est l'eau oxygénée.

18. Procédé selon l'une des revendications 12 à 17 caractérisé par le fait que la quantité de base ajoutée est telle que le pH du milieu réactionnel est supérieur à 7,0 et inférieur à environ 10.

19. Procédé selon la revendication 18 caractérisé par le fait que ledit pH est compris entre 7,5 et 9,0.

20. Procédé selon l'une des revendications 12 à 19 caractérisé par le fait que la température du milieu réactionnel est comprise entre 5°C et 70°C.

21. Procédé selon la revendication 20 caractérisé par le fait que la température du milieu réactionnel est comprise entre 40°C et 70°C.

22. Procédé selon l'une des revendications 12 à 21 caractérisé par le fait que l'hydroxyde cérique séparé est soumis à un lavage effectué à l'eau ou à l'aide d'une solution basique.

23. Procédé selon la revendication 12 caractérisé par le fait que l'hydroxyde de cérique répond à la formule suivante :

$$Ce(OH)_x, (X)_y, nH_2O \quad (I)$$

dans laquelle :

— X représente un anion chlorure ou nitrate,

— y est inférieur à 0,5,

— x = 4 – Y,

— n varie entre 0 et environ 20.

24. Procédé selon la revendication 23 caractérisé par le fait que l'hydroxyde cérique répond à la formule (I) dans laquelle y est compris entre 0 et 0,1.

25. Procédé selon la revendication 24 caractérisé par le fait que l'hydroxyde cérique de formule (I) est préparé en faisant réagir une solution de chlorure ou nitrate céreux et une solution d'ammoniaque, en présence d'eau oxygénée, à un pH compris entre 7,5 et 9,0 et à une température réactionnelle comprise entre 40°C et 70°C, à séparer le précipité et à le laver.

26. Procédé selon la revendication 12 caractérisé par le fait que la base décomposable est l'ammoniaque, l'urée, l'hydrogénocarbonate d'ammonium, le carbonate d'ammonium, une amine primaire, secondaire, tertiaire ou quaternaire ou leurs mélanges.

27. Procédé selon la revendication 26 caractérisé par le fait que la base décomposable est l'ammoniaque, un hydroxyde de tétraalkylammonium ou leurs mélanges.

28. Procédé selon l'une des revendications 26 et 27 caractérisé par le fait que la concentration de la solution basique varie entre 1 et 10 N.

29. Procédé selon l'une des revendications 12 à 28 caractérisé par le fait que la concentration de l'hydroxyde cérique exprimée en $CeO_2$ varie entre 0,3 et 6 moles/litre.

30. Procédé selon le revendication 29 caractérisé par le fait que ladite concentration est comprise entre 2 et 3 moles/litre.

31. Procédé selon la revendication 12 à 30 caractérisé par le fait que la température d'autoclavage varie entre 100°C et 350°C.

32. Procédé selon la revendication 31 caractérisé par le fait que ladite température est comprise entre 150°C et 350°C.

33. Procédé selon l'une des revendications 12 à 32 caractérisé par le fait que la pression varie entre 1 (1.10⁵ Pa) et 165 bars (165.10⁵ Pa).

34. Procédé selon la revendication 33 caractérisé par le fait que ladite pression est comprise entre 5 (5.10⁵ Pa) et 165 bars (165.10⁵ Pa).

35. Procédé selon l'une des revendications 31 à 34 caractérisé par le fait que la durée de l'autoclavage varie entre 30 minutes et 6 heures.

36. Procédé selon l'une des revendications 12 à 35 caractérisé par le fait que la température de calcination est comprise entre 300°C et 1000°C.

37. Procédé selon la revendication 36 caractérisé par le fait que ladite température est comprise entre 350°C et 800°C.

38. Procédé selon l'une des revendications 35 et 36 caractérisé par le fait que la durée de calcination varie entre 2 et 6 heures.

## Patentansprüche

1. Ceroxid, dadurch gekennzeichnet, daß es eine spezifische Oberfläche von mindestens 15 m²/g aufweist, gemessen nach dem Brennen bei einer Temperatur im Bereich von 800 bis 900°C.

2. Ceroxid nach Anspruch 1, dadurch gekennzeichnet, daß es eine spezifische Oberfläche von 20 bis 60 m²/g aufweist, gemessen nach dem Brennen bei einer Temperatur von 800°C.

3. Ceroxid nach einem der Ansprüche 1 und 2, dadurch gekennzeichnet, daß es ein Porenvolumen von mindestens 0,1 cm³/g aufweist, gemessen nach dem Brennen bei einer Temperatur im Bereich von 800 bis 900°C.

4. Ceroxid nach Anspruch 3, dadurch gekennzeichnet, daß es ein Porenvolumen von 0,15 bis 0,25 cm³/g aufweist, nach dem Brennen bei einer Temperatur von 800°C.

5. Ceroxid nach einem der Ansprüche 1 bis 4, dadurch gekennzeichnet, daß es einen mittleren Porendurchmesser im Bereich von 20 nm (200 Å) bis 30 nm (300 Å) aufweist nach Brennen bei einer Temperatur von 800°C.

6. Ceroxid nach einem der Ansprüche 1 und 2, dadurch gekennzeichnet, daß es eine spezifische Oberfläche im Bereich von 15 bis 1.60 m²/g aufweist, gemessen nach Brennen bei einer Temperatur im Bereich von 350 bis 900°C.

7. Ceroxid nach Anspruch 6, dadurch gekennzeichnet, daß es ein Porenvolumen im Bereich von 0,35 bis 0,15 cm³/g aufweist, nach Brennen bei einer Temperatur im Bereich von 350 bis 900°C.

8. Ceroxid, dadurch gekennzeichnet, daß es eine spezifische Oberfläche im Bereich von 70 bis 160 m²/g aufweist, gemessen nach Brennen bei einer Temperatur im Bereich von 350 bis 450°C und daß es eine spezifische Oberfläche von mindestens 15 m²/g beibehält, wenn es einer Temperatur im Bereich von 800 bis 900°C unterworfen wird.

9. Ceroxid nach Anspruch 8, dadurch gekennzeichnet, daß es eine spezifische Oberfläche im Bereich von 20 bis 60 m²/g aufweist, wenn es einer Temperatur von 800°C unterworfen wird.

10. Ceroxid nach einem der Ansprüche 8 und 9, dadurch gekennzeichnet, daß es eine spezifische Oberfläche im Bereich von 100 bis 160 m²/g aufweist, gemessen nach Brennen bei einer Temperatur im Bereich von 350 bis 450°C.

11. Ceroxid nach einem der Ansprüche 8 bis 10, dadurch gekennzeichnet, daß es einen mittleren Porendurchmesser im Bereich von 10 nm (100 Å) bis 20 nm (200 Å) aufweist, nach Brennen bei einer Temperatur von 350°C.

12. Verfahren zur Herstellung von Ceroxid gemäß einem der Ansprüche 1 bis 11, dadurch gekennzeichnet, daß man

— ein Cerhydroxid herstellt, indem man eine Cersalzlösung mit einer Base gegebenenfalls in Gegenwart eines Oxidationsmittels umsetzt, wobei die Base in einem Mengenanteil vorliegt, daß der pH-Wert des Reaktionsmediums mehr als 7 beträgt ; und daß man den erhaltenen Niederschlag abtrennt und gegebenenfalls wäscht ;

— das Cerhydroxid in Wasser oder in der wäßrigen Lösung einer zersetzbaren Base suspendiert ;

— daß man es in einem geschlossenen Raum bis auf eine Temperatur und einen Druck unterhalb der kritischen Temperatur und dem kritischen Druck des Mediums erhitzt (im Autoklaven behandelt) ;

12

— das Reaktionsgemisch abkühlt und auf Atmosphärendruck zurückführt ;

— das so behandelte Cerhydroxid abtrennt und

— es brennt.

13. Verfahren nach Anspruch 12, dadurch gekennzeichnet, daß die Cersalzlösung eine Lösung von Cer(III)chlorid oder von Cer(III)- oder Cer(IV)nitrat oder eines Gemisches von diesen ist.

14. Verfahren nach Anspruch 12, dadurch gekennzeichnet, daß die Cersalzlösung eine wäßrige Lösung von Cer(IV)nitrat oder eine wäßrige Lösung von Cer(III)nitrat, eingesetzt in Gegenwart eines Oxidationsmittels, ist.

15. Verfahren nach Anspruch 14, dadurch gekennzeichnet, daß die Cersalzlösung eine wäßrige Lösung von Cer(IV)nitrat ist, die aus der elektrochemischen Oxidation einer Lösung von Cer(III)nitrat oder aus der Einwirkung von Salpetersäure auf ein Cer(IV)oxidhydrat stammt.

16. Verfahren nach einem der Ansprüche 12 bis 15, dadurch gekennzeichnet, daß die Base eine Ammoniaklösung ist.

17. Verfahren nach Anspruch 14, dadurch gekennzeichnet, daß das Oxidationsmittel eine Wasserstoffperoxidlösung ist.

18. Verfahren nach einem der Ansprüche 12 bis 17, dadurch gekennzeichnet, daß die Base in einer solchen Menge zugesetzt wird, daß der pH-Wert des Reaktionsmediums über 7,0 und unter etwa 10 liegt.

19. Verfahren nach Anspruch 18, dadurch gekennzeichnet, daß der pH-Wert im Bereich von 7,5 bis 9,0 liegt.

20. Verfahren nach einem der Ansprüche 12 bis 19, dadurch gekennzeichnet, daß die Temperatur des Reaktionsmediums im Bereich von 5 bis 70°C liegt.

21. Verfahren nach Anspruch 20, dadurch gekennzeichnet, daß die Temperatur des Reaktionsmediums im Bereich von 40 bis 70°C liegt.

22. Verfahren nach einem der Ansprüche 12 bis 21, dadurch gekennzeichnet, daß das abgetrennte Cer(IV)hydroxid mit Wasser oder mit einer basischen Lösung gewaschen wird.

23. Verfahren nach Anspruch 12, dadurch gekennzeichnet, daß das Cerhydroxid der folgenden Formel entspricht :

$$Ce(OH)_x (X)_Y, nH_2O \quad (I)$$

in der

X ein Chlorid- oder Nitratanion darstellt,

$y < 0,5$ ist,

$x = 4 - y$ und

n im Bereich von 0 bis etwa 20 liegt.

24. Verfahren nach Anspruch 23, dadurch gekennzeichnet, daß das Cer(IV)hydroxid der Formel (I) entspricht, in der y im Bereich von 0 bis 0,1 liegt.

25. Verfahren nach Anspruch 24, dadurch gekennzeichnet, daß das Cer(IV)hydroxid der Formel (I) hergestellt wird, indem man eine Lösung von Cer(III)chlorid oder -nitrat und eine Ammoniaklösung in Gegenwart von Wasserstoffperoxidlösung bei einem pH-Wert im Bereich von 7,5 bis 9,0 und bei einer Reaktionstemperatur im Bereich von 40 bis 70°C umsetzt, den Niederschlag abtrennt und ihn wäscht.

26. Verfahren nach Anspruch 12, dadurch gekennzeichnet, daß die zersetzbare Base Ammoniak, Harnstoff, Ammoniumhydrogencarbonat, Ammoniumcarbonat, ein primäres, sekundäres, tertiäres oder quaternäres Amin oder ein Gemisch daraus ist.

27. Verfahren nach Anspruch 26, dadurch gekennzeichnet, daß die zersetzbare Base Ammoniak, ein Tetraalkylammoniumhydroxid oder ein Gemisch davon ist.

28. Verfahren nach den Ansprüchen 26 und 27, dadurch gekennzeichnet, daß die Konzentration der basischen Lösung 1 n bis 10 n beträgt.

29. Verfahren nach einem der Ansprüche 12 bis 28, dadurch gekennzeichnet, daß die Konzentration an Cer(IV)hydroxid, angegeben als $CeO_2$ 0,3 bis 6 Mol/l beträgt.

30. Verfahren nach Anspruch 29, dadurch gekennzeichnet, daß die Konzentration 2 bis 3 Mol/l beträgt.

31. Verfahren nach einem der Ansprüche 12 bis 30, dadurch gekennzeichnet, daß die Temperatur bei der Autoklavenbehandlung im Bereich von 100 bis 350°C liegt.

32. Verfahren nach Anspruch 31, dadurch gekennzeichnet, daß die Temperatur im Bereich von 150 bis 350°C liegt.

33. Verfahren nach einem der Ansprüche 12 bis 32, dadurch gekennzeichnet, daß der Druck im Bereich von 1 bar ($1 \times 10^5$ Pa) bis 165 bar ($165 \times 10^5$ Pa) liegt.

34. Verfahren nach Anspruch 33, dadurch gekennzeichnet, daß der Druck 5 bar ($5 \times 10^5$ Pa) bis 165 bar (165 × 10⁵ Pa) beträgt.

35. Verfahren nach einem der Ansprüche 31 bis 34, dadurch gekennzeichnet, daß die Dauer der Autoklavenbehandlung 30 min bis zu 6 h beträgt.

36. Verfahren nach einem der Ansprüche 12 bis 35, dadurch gekennzeichnet, daß die Brenntemperatur 300 bis 1000°C beträgt.

37. Verfahren nach Anspruch 36, dadurch gekennzeichnet, daß die Temperatur 350 bis 800°C beträgt.

8. Verfahren nach einem der Ansprüche 35 bis 36, dadurch gekennzeichnet, daß die Brenndauer 2 bis 6 h beträgt.

## Claims

1. A ceric oxide characterised in that it has a specific surface area of at least 15 m²/g as measured after calcination at a temperature of between 800 and 900°C.

2. A ceric oxide according to claim 1 characterised in that it has a specific surface area of between 20 and 60 m²/g as measured after calcination at a temperature of 800°C.

3. A ceric oxide according to one of claims 1 and 2 characterised in that it has a pore volume of at least 0.1 cm³/g as measured after calcination at a temperature of between 800°C and 900°C.

4. A ceric oxide according to claim 3 characterised in that it has a pore volume of between 0.15 and 0.25 cm³/g after calcination at a temperature of 800°C.

5. A ceric oxide according to one of claims 1 to 4 characterised in that it has a mean pore diameter varying between 20 nm (200 Å) and 30 nm (300 Å) after calcination at a temperature of 800°C.

6. A ceric oxide according to one of claims 1 and 2 characterised in that it has a specific surface area of between 15 and 160 m²/g as measured after calcination at a temperature of between 350°C and 900°C.

7. A ceric oxide according to claim 6 characterised in that it has a pore volume which varies from 0. 35 to 0. 15 cm³/g after calcination at a temperature which varies from 350°C to 900°C.

8. A ceric oxide characterised in that it has a specific surface area of between 70 and 160 m²/g as measured after calcination at a temperature of between 350°C and 450°C and that it retains a specific surface area of at least 15 m²/g when it is subjected to a temperature of between 800°C and 900° C.

9. A ceric oxide according to claim 8 characterised in that it retains a specific surface area of between 20 and 60 m²/g when it is subjected to a temperature of 800°C.

10. A ceric oxide according to one of claims 8 and 9 characterised in that it has a specific surface area of between 100 and 160 m²/g as measured after calcination at a temperature of between 350°C and 450°C.

11. A ceric oxide according to one of claims 8 to 10 characterised in that it has a mean pore diameter which varies between 10 nm (100 Å) and 20 nm (200 Å) after calcination at a temperature of 350°C.

12. A process for producing the ceric oxide described in one of claims 1 to 11 characterised in that it comprises :

— preparing a ceric hydroxide by reacting a solution of cerise salt and a base, possibly in the presence of an oxidising agent, the proportion of base being such that the pH-value of the reaction medium is higher than 7 ; separating the precipitate obtained and possibly washing same ;
— putting the ceric hydroxide in suspension in water or in an aqueous solution of a decomposable base ;
— heating it in an enclosed space to a temperature and a pressure which are respectively lower than the critical temperature and the critical pressure of said medium (autoclaving) ;
— cooling the reaction mixture and returning it to atmospheric pressure ;
— separating the ceric hydroxide treated in that way ; and
— then calcinating it.

13. A process according to claim 12 characterised in that the solution of cerise salt is a solution of cerous chloride or cerium nitrate in the cerous or ceric state or a mixture thereof.

14. A process according to claim 12 characterised in that the solution of cerise salt is an aqueous solution of ceric nitrate or an aqueous solution of cerous nitrate used in the presence of an oxidising agent.

15. A process according to claim 14 characterised in that the solution of cerium salt is an aqueous solution of ceric nitrate resulting from the electrochemical oxidation of a solution of cerous nitrate or the action of nitric acid on a hydrated ceric oxide.

16. A process according to one of claims 12 to 15 characterised in that the base is a solution of ammonia.

17. A process according to claim 14 characterised in that the oxidising agent is hydrogen peroxide.

18. A process according to one of claims 12 to 17 characterised in that the amount of base added is such that the pH-value of the reaction medium is higher than 7.0 and lower than about 10.

19. A process according to claim 18 characterised in that said pH-value is between 7.5 and 9.0.

14

20. A process according to one of claims 12 to 19 characterised in that the temperature of the reaction medium is between 5°C and 70°C.

21. A process according to claim 20 characterised in that the temperature of the reaction medium is between 40°C and 70°C.

22. A process according to one of claims 12 to 21 characterised in that the separated ceric hydroxide is subjected to a washing operation which is carried out using water or a basic solution.

23. A process according to claim 12 characterised in that the ceric hydroxide corresponds to the following formula :

$$Ce(OH)_x\,(X)_y,\,nH_2O \quad (I)$$

wherein :
— X represents a nitrate or chloride anion,
— y is less than 0.5,
— x = 4 – Y, and
— n varies between 0 and about 20.

24. A process according to claim 23 characterised in that the ceric hydroxide corresponds to formula (I) in which y is between 0 and 0.1.

25. A process according to claim 24 characterised in that the ceric hydroxide of formula (I) is prepared by reacting a solution of cerous nitrate or chloride and a solution of ammonia, in the presence of hydrogen peroxide, at a pH-value of between 7.5 and 9.0 and at a reaction temperature of between 40°C and 70°C, separating the precipitate and washing it.

26. A process according to claim 12 characterised in that the decomposable base is ammonia, urea, ammonium hydrogen carbonate, ammonium carbonate, a primary, secondary, tertiary or quaternay amine or mixtures thereof.

27. A process according to claim 26 characterised in that the decomposable base is ammonia, a tetraalkylammonium hydroxide or mixtures thereof.

28. A process according to one of claims 26 and 27 characterised in that the concentration of the basic solution varies between 1 and 10 N.

29. A process according to one of claims 12 to 28 characterised in that the concentration of ceric hydroxide expressed as $CeO_2$ varies between 0.3 and 6 moles/litre.

30. A process according to claim 29 characterised in that said concentration is between 2 and 3 moles/litre.

31. A process according to claims 12 to 30 characterised in that the autoclaving temperature varies between 100°C and 350°C.

32. A process according to claim 31 characterised in that said temperature is between 150°C and 350°C.

33. A process according to one of claims 12 to 32 characterised in that the pressure varies between 1 ($1.10^5$ Pa) and 165 bars ($165.10^5$ Pa).

34. A process according to claim 33 characterised in that said pressure is between 5 ($5.10^5$ Pa) and 165 bars ($165.10^5$ Pa).

35. A process according to one of claims 31 to 34 characterised in that the duration of the autoclaving operation varies between 30 minutes and 6 hours.

36. A process according to one of claims 12 to 35 characterised in that the calcination temperature is between 300°C and 1000°C.

37. A process according to claim 36 characterised in that said temperature is between 350°C and 800°C.

38. A process according to one of claims 35 and 36 characterised in that the calcination period varies between 2 and 6 hours.

FIG.1